(19) Europäisches Patentamt
European Patent Office
Office européen des brevets

(11) **EP 3 458 326 B1**

(12) **EUROPÄISCHE PATENTSCHRIFT**

(45) Veröffentlichungstag und Bekanntmachung des Hinweises auf die Patenterteilung:
**01.01.2025 Patentblatt 2025/01**

(21) Anmeldenummer: **17721995.3**

(22) Anmeldetag: **27.04.2017**

(51) Internationale Patentklassifikation (IPC):
**B60W 50/00** (2006.01)  **B60W 50/14** (2020.01)
**B60W 30/14** (2006.01)  **B60W 40/068** (2012.01)

(52) Gemeinsame Patentklassifikation (CPC):
**B60W 50/0097; B60W 30/143; B60W 40/068; B60W 50/14;** B60K 2310/22; B60W 2050/0083; B60W 2556/50; B60W 2720/10

(86) Internationale Anmeldenummer:
**PCT/EP2017/060111**

(87) Internationale Veröffentlichungsnummer:
**WO 2017/198443 (23.11.2017 Gazette 2017/47)**

(54) **VERFAHREN ZUR BESTIMMUNG EINER SICHEREN GESCHWINDIGKEIT AN EINEM ZUKÜNFTIGEN WEGPUNKT**

METHOD FOR DETERMINING A SAFE SPEED AT A FUTURE WAY POINT

PROCÉDÉ DE DÉTERMINATION D'UNE VITESSE DE SÉCURITÉ AU NIVEAU D'UN POINT DE PASSAGE À VENIR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.05.2016 DE 102016208675**

(43) Veröffentlichungstag der Anmeldung:
**27.03.2019 Patentblatt 2019/13**

(73) Patentinhaber:
• **ZF Friedrichshafen AG**
  **88046 Friedrichshafen (DE)**
• **ZF Active Safety GmbH**
  **56070 Koblenz (DE)**

(72) Erfinder:
• **SCHLEGEL, Matthias**
  **89134 Blaustein (DE)**
• **ABHAU, Jochen**
  **6900 Bregenz (AT)**
• **GILSDORF, Heinz-Joachim**
  **97499 Donnersdorf (DE)**
• **KING, Julian**
  **6830 Rankweil (AT)**
• **KÖHLER, Jochen**
  **6850 Dornbirn (AT)**
• **KRIMMEL, Horst**
  **88069 Tettnang (DE)**
• **NIEDERBRUCKER, Gerhard**
  **88045 Friedrichshafen (DE)**
• **TURNER, Lara Ruth**
  **88048 Friedrichshafen (DE)**
• **WAGNER, Volker**
  **88213 Ravensburg (DE)**
• **ZDYCH, Robert**
  **88045 Friedrichshafen (DE)**
• **ADLER, Vanessa**
  **56179 Niederwerth (DE)**
• **HEINRICHS-BARTSCHER, Sascha**
  **56566 Neuwied (DE)**
• **RAFFAUF, Ralf**
  **56220 Urmitz (DE)**
• **SIMON, Holger**
  **65604 Elz (DE)**
• **STEIN, Walter**
  **56179 Niederwerth (DE)**

(74) Vertreter: **ZF Friedrichshafen AG**
  **Gewerblicher Rechtsschutz**
  **Löwentalerstraße 20**
  **88046 Friedrichshafen (DE)**

EP 3 458 326 B1

(56) Entgegenhaltungen:
EP-A1- 1 659 367          EP-A1- 2 135 783
EP-A2- 1 577 148          EP-A2- 1 870 674
EP-B1- 1 577 148          JP-A- 2011 186 577
US-A1- 2010 250 086

**Beschreibung**

Die Erfindung betrifft ein Verfahren und eine Vorrichtung zur Bestimmung einer sicheren Geschwindigkeit an einem zukünftigen Wegpunkt eines fahrenden Fahrzeugs. Sofern nicht ausdrücklich darauf hingewiesen wird, werden die Begriffe maximaler Reibwert und Reibwert im Folgenden synonym verwendet.

Allgemein obliegt die Einschätzung der Straßenverhältnisse dem Fahrer, der seine Fahrweise darauf ausrichten muss. Fahrzeugregelsysteme wie ESC (Electronic Stability Control)/TCS (Traction Control System) oder ABS (Antiblockiersystem) helfen dem Fahrer, das Fahrzeug im Grenzbereich zu stabilisieren, um so seiner Fahraufgabe in Extremsituationen leichter entsprechen zu können. Die Wirkung solcher Fahrzeugregelsysteme hängt entscheidend vom am aktuellen Wegpunkt verfügbaren maximalen Reibwert μ (auch als maximaler Kraftschlussbeiwert bezeichnet) ab. Das Zusammenspiel zwischen Reifen, Untergrund und Zwischenmedium ist hierfür entscheidend. Nässe, Schnee und Eis erniedrigen den zur Verfügung stehenden Reibwert zwischen Reifen und Fahrbahn gegenüber dem auf einer trockenen Fahrbahn zur Verfügung stehenden Reibwert erheblich. Sich plötzlich ändernde Reibwerte, wie sie beispielsweise durch veränderte Umgebungsbedingungen zustande kommen, können zu instabilen Fahrsituationen führen und erhöhen damit das Unfallrisiko. Besonders gefährlich wird es, wenn der Fahrer des Fahrzeugs aufgrund falscher Einschätzung des verfügbaren Reibwerts zu schnell auf eine Kurve zufährt.

Bislang wird zur Bestimmung einer sicheren Kurvengeschwindigkeit lediglich der Streckenverlauf einer Straße anhand von Kartendaten berücksichtigt. Ferner wird von einem konstanten max. Reibwert (häufig μ = 1) ausgegangen. Idealerweise geht in die Berechnung zusätzlich ein Fahrzeugmodell ein, das die Eigenheiten des vorliegenden Fahrzeugs widerspiegelt. Zudem könnte bei Kenntnis des max. Reibwerts das Fahrzeug bereits vor der Kurve so weit verzögert werden, dass diese problemlos durchfahren werden kann.

Aus EP 1 870 674 A2 ist ein Verfahren zur Durchführung einer Kurvenvorwarnung für Kraftfahrzeuge bekannt. Eine Steuereinheit lädt Kartendaten aus einem Speicher und ermittelt mittels Positionsermittlungsmitteln eine aktuelle Position. Für einen vorgebbaren vorausliegenden Streckenteil wird eine Krümmung der Strecke auf Basis der Kartendaten berechnet. Anhand der Krümmung wird eine Kurvensollgeschwindigkeit als Empfehlung berechnet und anzeigt.

Es ist Aufgabe der Erfindung, ein Verfahren anzugeben, mit dem sich eine sichere Geschwindigkeit an einem zukünftigen Wegpunkt eines Fahrzeugs, das sich entlang einer Strecke mit bekanntem Streckenverlauf bewegt, bestimmen lässt. Eine weitere Aufgabe der Erfindung besteht darin, eine entsprechende Vorrichtung anzugeben.

Diese Aufgaben werden gelöst durch ein Verfahren gemäß den Merkmalen des Patentanspruches 1 und einer Vorrichtung gemäß den Merkmalen des Patentanspruches 10. Vorteilhafte Ausgestaltungen ergeben sich aus den abhängigen Patentansprüchen.

Es wird ein Verfahren zur Bestimmung einer sicheren Geschwindigkeit an einem zukünftigen Wegpunkt eines Fahrzeugs vorgeschlagen, das sich entlang einer Strecke mit bekanntem Streckenverlauf bewegt und die folgenden Schritte umfasst: Bereitstellen zumindest einer für den Streckenverlauf der Strecke charakterisierenden Streckeninformation; Bereitstellen einer ersten Wahrscheinlichkeitsverteilung eines max. Reibwerts am aktuellen Wegpunkt und/oder an dem zukünftigen Wegpunkt des Fahrzeugs; Ermitteln einer zweiten Wahrscheinlichkeitsverteilung einer Fahrzeuggeschwindigkeit an dem zukünftigen Wegpunkt aus der zumindest einen Streckeninformation und der ersten Wahrscheinlichkeitsverteilung; und Bestimmung der sicheren Geschwindigkeit aus der zweiten Wahrscheinlichkeitsverteilung.

Das erfindungsgemäße Verfahren basiert auf der Überlegung, nicht nur den vor dem Fahrzeug liegenden Streckenverlauf, sondern auch sich gegebenenfalls ändernde Umgebungsbedingungen zu berücksichtigen, welche die maximal am Reifen übertragbaren Kräfte erheblich einschränken können. Ausgangspunkt hierfür bildet eine kontinuierliche oder diskrete Wahrscheinlichkeitsverteilung des am aktuellen Wegpunkt des Fahrzeugs und/oder an dem zukünftigen Wegpunkt des Fahrzeugs vorliegenden max. Reibwerts.

Das Verfahren kann detektieren, ob sich das Fahrzeug für die vorliegenden Umgebungsbedingungen zu schnell bewegt. Im Falle einer zu hohen Geschwindigkeit kann daraus ein Handlungsbedarf vor dem Erreichen des zukünftigen Wegpunkts abgeleitet und z.B. in Gestalt einer Information, Warnung oder eines automatisierten Fahreingriffs (Fahrzeugverzögerung etc.) ausgegeben werden. Bei automatisiert fahrenden Fahrzeugen, z.B. unter Verwendung eines oder mehrerer Fahrzeugassistenzsysteme, kann die sichere Geschwindigkeit zur Berechnung einer Fahrstrategie verwendet werden, beispielsweise indem sie einen Optimierungsraum begrenzt, innerhalb dessen eine Geschwindigkeitstrajektorie gesucht wird, welche die für den zukünftigen Wegpunkt sichere Geschwindigkeit keinesfalls überschreitet.

Die sichere Geschwindigkeit an dem zukünftigen Wegpunkt kann durch Wahl eines q-Quantils der zweiten Wahrscheinlichkeitsverteilung bestimmt werden. Wie dem Fachmann bekannt ist, ist ein Quantil ein Lagemaß in der Statistik. Das q-Quantil entspricht dem Integral von der gewählten sicheren Geschwindigkeit bis unendlich über der zweiten Wahrscheinlichkeitsverteilung. Dies bedeutet, dass die tatsächliche Geschwindigkeit, mit welcher das Fahrzeug den zukünftigen Wegpunkt stabil passieren kann, mit einer Wahrscheinlichkeit des gewählten q-Quantils × 100 % größer oder gleich der sicheren Geschwindigkeit ist. Die sichere Geschwindigkeit an dem zukünftigen Wegpunkt kann durch die Gleichung

$$\int_{v^*}^{\infty} P(v)\, \mathrm{d}v = q_S \qquad (1)$$

ermittelt werden. In Gleichung (1) stellen v* die sichere Geschwindigkeit, P(v) die zweite Wahrscheinlichkeitsverteilung und $q_s$ das gewählte q-Quantil dar. Dabei wird das q-Quantil $q_s$ vorgegeben und unter Verwendung der Gleichung (1) die sichere Geschwindigkeit v* ermittelt.

Alternativ kann zur Bestimmung einer sicheren Geschwindigkeit das p-Quantil der zweiten Wahrscheinlichkeitsverteilung verwendet werden, d.h. das Integral von 0 bis zur sicheren Geschwindigkeit v*. Für das gewählte p-Quantil $p_s$ gilt dann

$$\int_{0}^{v^*} P(v)\, \mathrm{d}v = p_S = 1 - q_S \qquad (1.1)$$

Als die zumindest eine Streckeninformation kann eine Kurvenkrümmung an und/oder vor dem zukünftigen Wegpunkt des Fahrzeugs verarbeitet werden. Bei Kenntnis der Kurvenkrümmung kann der Schritt des Ermittelns der zweiten Wahrscheinlichkeitsverteilung anhand der Gleichung

$$a_x^2 + \kappa^2(s) * v_x^4 - g^2 * \mu^2(s) = 0 \qquad (2)$$

erfolgen. In der Formel sind $a_x$ die Fahrzeuglängsbeschleunigung, $\kappa$ die Kurvenkrümmung, s der Weg, g die Gravitationskonstante, $v_x$ die Geschwindigkeit des Fahrzeugs in Richtung seiner Längsachse (Fahrzeuglängsgeschwindigkeit), $\mu$ der Reibwert. Der angegebenen Gleichung (2) liegt die Annahme zugrunde, dass das Fahrzeug vereinfacht als Massepunkt betrachtet werden kann. Selbstverständlich können zur Bestimmung der zweiten Wahrscheinlichkeitsverteilung auch komplexere Fahrzeugmodelle verwendet werden.

Gemäß einer weiteren Ausgestaltung erfolgt der Schritt des Ermittelns der zweiten Wahrscheinlichkeitsverteilung unter der Annahme, dass das Fahrzeug die Strecke, insbesondere den zukünftigen Wegpunkt, unbeschleunigt, durchfährt. Dadurch kann in Gleichung (2) der Term $a_x^2$ vernachlässigt werden, sodass eine einfache Umrechnung der Wahrscheinlichkeitsverteilung des Reibwerts $\mu$ am relevanten Wegpunkt s in die Wahrscheinlichkeitsverteilung der Fahrzeuggeschwindigkeit $v_x$ vorgenommen werden kann.

Insbesondere wird als q-Quantil ein Wert gewählt, der abhängig von einem Fahrzeugtyp, einem Fahrwerkstyp oder einem gewählten Fahrmodus ist. Das q-Quantil charakterisiert ein die sichere Geschwindigkeit verarbeitendes System. In Abhängigkeit des Fahrzeugtyps, beispielsweise eines Sportwagens, einer komfortbetonten Limousine, eines Geländewagens usw. kann die sichere Geschwindigkeit unterschiedlich gewählt werden. Verfügt ein Fahrzeug über ein Fahrzeugassistenzsystem, mit welchem sich das Fahrwerk in unterschiedlichen Modi einstellen lässt, so kann beispielsweise auch für unterschiedliche Modi ein jeweiliges q-Quantil festgelegt werden, das die Fahreigenschaft des Fahrzeugs berücksichtigt.

Das q-Quantil wird bevorzugt derart gewählt, dass die sich daraus ergebende gewählte sichere Geschwindigkeit kleiner als die wahre sichere Geschwindigkeit an dem zukünftig gewählten Wegpunkt ist. Hierdurch kann sichergestellt werden, dass sich keine für das Fahrzeug gefährliche Situation an dem zukünftigen Wegpunkt ergibt.

Gemäß einer weiteren zweckmäßigen Ausgestaltung wird eine Vorrichtung zur Bestimmung einer sicheren Geschwindigkeit an einem zukünftigen Wegpunkt eines Fahrzeugs, das sich entlang einer Strecke mit bekanntem Streckenverlauf bewegt, vorgeschlagen. Die Vorrichtung umfasst ein erstes Mittel, um eine zweite Wahrscheinlichkeitsverteilung einer Fahrzeuggeschwindigkeit an dem zukünftigen Wegpunkt aus zumindest einer den Streckenverlauf der Strecke charakterisierenden Streckeninformation und einer ersten Wahrscheinlichkeitsverteilung eines max. Reibwerts am aktuellen Wegpunkt und/oder an dem zukünftigen Wegpunkt des Fahrzeugs zu ermitteln; sowie ein zweites Mittel, um die sichere Geschwindigkeit aus der zweiten Wahrscheinlichkeitsverteilung zu ermitteln. Die erste Wahrscheinlichkeitsverteilung kann durch eine Recheneinheit des Fahrzeugs ermittelt und für die weitere Verarbeitung zur Bestimmung der sicheren Geschwindigkeit bereitgestellt werden.

Die erfindungsgemäße Vorrichtung weist die gleichen Vorteile auf, wie diese vorstehend in Verbindung mit dem erfindungsgemäßen Verfahren beschrieben wurden.

Die Vorrichtung kann weitere Mittel zur Durchführung des beschriebenen Verfahrens umfassen.

Die Erfindung wird nachfolgend näher anhand eines Ausführungsbeispiels in der Zeichnung beschrieben. Es zeigen:

Fig. 1 eine schematische Darstellung eines Programmablaufplans des erfindungsgemäßen Verfahrens, und

Fig. 2 eine schematische Darstellung des Vorgehens zur Bestimmung einer sicheren Geschwindigkeit an einem zukünftigen Wegpunkt eines Fahrzeugs.

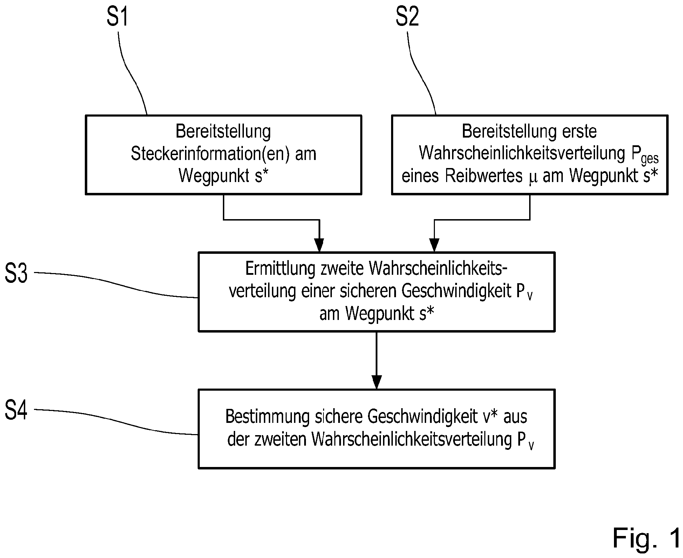

Fig. 1 zeigt den schematischen Ablauf des erfindungsgemäßen Verfahrens zur Bestimmung einer sicheren Geschwindigkeit v* eines Fahrzeugs an einem zukünftigen Wegpunkt s* in einem Ablaufplan. Der zukünftige Wegpunkt s* ist beispielsweise eine Kurve, auf die sich das entlang einer (bekannten) Strecke bewegende Fahrzeug in Fahrzeuglängsrichtung zubewegt. Insbesondere kann als zukünftiger Wegpunkt s* der Scheitelpunkt dieser Kurve betrachtet werden. Alternativ kann sich der zukünftige Wegpunkt s* in einer konstanten Entfernung vor dem Fahrzeug befinden (Vorausschauhorizont). Die Daten über den vor dem Fahrzeug liegenden Streckenvorlauf und die nächste, vor dem Fahrzeug liegende Kurve können durch eine Recheneinheit des Fahrzeugs aus Kartendaten eines Navigationssystems ermittelt werden. In einem Schritt S1 werden ein oder mehrere, den Streckenverlauf der Strecke charakterisierende Streckeninformationen bereitgestellt. Solche, den Streckenverlauf der Strecke charakterisierende Streckeninformationen umfassen insbesondere eine Kurvenkrümmung κ an dem zukünftigen Wegpunkt s*. Zusätzlich kann die Kurvenkrümmung vor und/oder nach dem zukünftigen Wegpunkt s* des Fahrzeugs als Streckeninformation verarbeitet werden.

In einem zweiten Schritt S2 erfolgt die Bereitstellung einer ersten Wahrscheinlichkeitsverteilung $P_{ges}$ eines max. Reibwerts μ am aktuellen Wegpunkt s und/oder an dem zukünftigen Wegpunkt s* des Fahrzeugs. Die bereitgestellte Wahrscheinlichkeitsverteilung $P_{ges}(\mu)$ kann in diskreter oder kontinuierlicher Form vorliegen. Auf welche Weise eine solche Wahrscheinlichkeitsverteilung ermittelt wird, ist nicht Gegenstand des vorliegenden Verfahrens.

Allgemein kann der max. Reibwert durch direkte oder indirekte Methoden ermittelt werden. Die Ermittlung des max. Reibwerts durch direkte Methoden wird als effektbasiert bezeichnet und kann in direkte, aktive und direkte, passive Methoden unterteilt werden. Bei einer direkten, aktiven Methode erfolgt durch Bremsen und/oder Lenken ein aktiver Eingriff in die Fahrdynamik des Fahrzeugs. Bei einer direkten, passiven Methode findet kein aktiver Eingriff in die Fahrdynamik des Fahrzeugs statt. Stattdessen erfolgt lediglich eine Beobachtung von Effekten des Reibwerts auf die Reifenlauffläche, das Fahrzeug und dergleichen im Verlauf von Fahrmanövern des Fahrzeugs, die dieses zur Erreichung eines vorgegebenen Navigationsziels ausführt. Um die Effekte des Reibwerts messen und daraus mit ausreichender Sicherheit auf einen max. Reibwert schließen zu können, ist die Übertragung hoher Kräfte am Reifen Voraussetzung.

Bei indirekten, ursachenbasierten Methoden erfolgt die Bestimmung des max. Reibwerts anhand von Parametern, die diesen physikalisch beeinflussen. Dies können beispielsweise ein Reifenprofil, die Gummimischung eines Reifens, dessen Temperatur, ein Reifenluftdruck, der Straßenbelag, dessen Temperatur, dessen Beschaffenheit (z.B. Schnee oder Nässe) etc. sein.

Die Schätzung eines Reibwerts an einem zukünftigen Wegpunkt eines Fahrzeugs kann beispielhaft mit einem Verfahren mit den folgenden Schritten beschrieben werden: aus einer ersten Anzahl an Parametern, welche für einen aktuellen Wegpunkt des Fahrzeugs ermittelt werden oder wurden und welche den max. Reibwert an dem aktuellen Wegpunkt des Fahrzeugs charakterisieren, wird eine Prädiktion einer ersten Wahrscheinlichkeitsverteilung für den max. Reibwert an dem aktuellen Wegpunkt des Fahrzeugs unter Nutzung eines Bayesschen Netzes durchgeführt. Weiter wird eine zweite Wahrscheinlichkeitsverteilung für den max. Reibwert an dem zukünftigen Wegpunkt des Fahrzeugs aus einer zweiten Anzahl an Informationen über den zukünftigen Wegpunkt geschätzt. Schließlich erfolgt eine Ermittlung einer resultierenden, kombinierten Wahrscheinlichkeitsverteilung aus der ersten und der zweiten Wahrscheinlichkeitsverteilung. Um die Reibwertverteilung an dem zukünftigen Wegpunkt vor dem Fahrzeug schätzen zu können, werden gemäß dieser beispielhaften Vorgehensweise den max. verfügbaren Reibwert beeinflussende Größen sowohl unter dem Fahrzeug (d.h. am aktuellen Wegpunkt) als auch vor dem Fahrzeug verarbeitet. Durch die hierbei vorgenommene Nutzung einer Vielzahl verfügbarer Informationen unter und vor dem Fahrzeug ist die Prädiktionsgüte der Reibwertverteilung an dem zukünftigen Wegpunkt hoch.

Grundsätzlich können im Rahmen des vorliegenden Verfahrens auch andere Vorgehensweisen zur Bereitstellung einer Wahrscheinlichkeitsverteilung des max. Reibwerts am aktuellen Wegpunkt und/oder an dem zukünftigen Wegpunkt des Fahrzeugs verarbeitet werden.

Mittels eines analytischen Zusammenhangs und der Streckeninformation(en), insbesondere der Kurvenkrümmung κ, kann die vorliegende Wahrscheinlichkeitsverteilung $P_{ges}(\mu)$ an dem zukünftigen Wegpunkt s* in eine Wahr-scheinlichkeitsverteilung $P_v(v)$ umgerechnet werden, wobei v die Fahrzeuggeschwindigkeit des Fahrzeugs darstellt. Diese Ermittlung erfolgt in dem in Fig. 1 gezeigten Diagramm als Schritt S3.

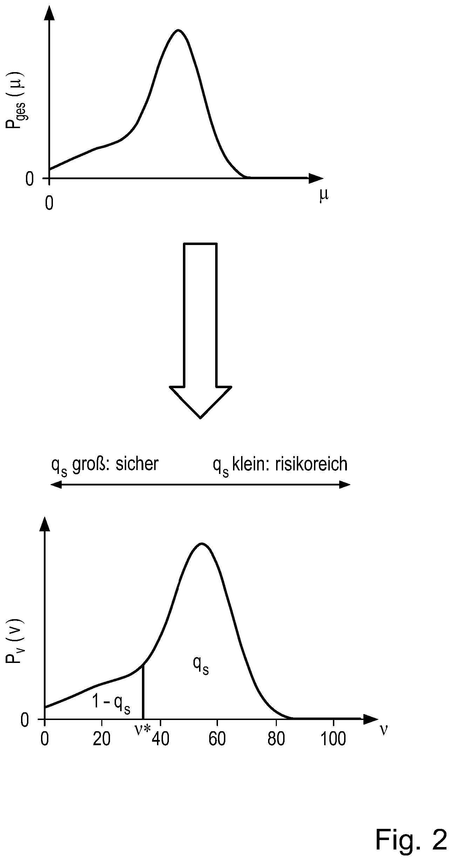

Als weiterer Schritt S4 erfolgt aus der nun ermittelten Wahrscheinlichkeitsverteilung der Geschwindigkeit $P_v(v)$ am Wegpunkt s* die Bestimmung der sicheren Geschwindigkeit v* aus dieser Wahrscheinlichkeitsverteilung. Dieses Vorgehen wird unter Bezugnahme auf Fig. 2 beschrieben.

Fig. 2 zeigt in der oberen Hälfte eine kontinuierliche Wahrscheinlichkeitsverteilung $P_{ges}(\mu)$ in Abhängigkeit des max. Reibwerts μ. Das Diagramm zeigt z.B. die Wahrscheinlichkeitsverteilung $P_{ges}(\mu)$ am aktuellen Wegpunkt und/oder an dem zukünftigen Wegpunkt s* des Fahrzeugs. Die Wahrscheinlichkeitsverteilung $P_{ges}(\mu)$ kann beispielsweise durch die Kombination von mehreren Wahrscheinlichkeitsverteilungen an jeweiligen Wegpunkten zwischen dem aktuellen Wegpunkt und dem zukünftigen Wegpunkt s* entstanden sein. Diese wird als gegeben angenommen.

Die Umrechnung der Wahrscheinlichkeitsverteilung $P_{ges}(\mu)$ in die Wahrscheinlichkeitsverteilung $P_v(v)$ der Geschwindigkeit am zukünftigen Wegpunkt s* erfolgt beispielsweise anhand der Differentialgleichung gemäß Gleichung (2). In dieser Formel stellen $v_x$ die Geschwindigkeit des Fahrzeugs in Richtung seiner Längsachse (Fahrzeuglängsgeschwindigkeit, $a_x$ die Beschleunigung des Fahrzeugs in Richtung seiner Längsachse (Fahrzeuglängsbeschleunigung), $\kappa$ die Kurvenkrümmung, s den Weg, g die Gravitationskonstante und $\mu$ den Reibwert dar. Bei der Verarbeitung der Gleichung (2) wird das Fahrzeug der Einfachheit halber als Massepunkt betrachtet. Allerdings könnte auch ein anderes Fahrzeugmodell zur Anwendung gelangen. Die Kurvenkrümmung $\kappa$ ergibt sich aus den oben erwähnten Kartendaten für den relevanten Wegpunkt, im vorliegenden Fall dem gewählten zukünftigen Wegpunkt s*. Ferner wird der Einfachheit halber davon ausgegangen, dass das Fahrzeug den betrachteten Wegpunkt s* unbeschleunigt durchfährt, weswegen der Term $a_x^2$ aus Gleichung (2) entfällt. Hieraus kann für die verschiedenen Reibwerte gemäß der in Fig. 2 oben gezeigten Wahrscheinlichkeitsverteilung ein jeweiliger Wahrscheinlichkeitswert der Geschwindigkeit ermittelt werden. Beispielhaft ergibt sich die in Fig. 2 unten gezeigte Wahrscheinlichkeitsverteilung $P_v(v)$ in Abhängigkeit der Fahrzeuggeschwindigkeit v.

Die Bestimmung der sicheren Geschwindigkeit v* an dem zukünftigen Wegpunkt s* (auch als Vorausschaupunkt bezeichnet) erfolgt durch Wahl eines q-Quantils $q_s$ der ermittelten Wahrscheinlichkeitsverteilung $P_v(v)$ über der Geschwindigkeit v. In Fig. 2 ist das q-Quantil mit $q_s$ bezeichnet, wobei $q_s$ einen Sicherheitsparameter darstellt.

$q_s$ entspricht gemäß Gleichung (1) dem Integral von der sicheren Geschwindigkeit v* bis unendlich über der Wahrscheinlichkeitsverteilung $P_v$. Dies bedeutet, dass die tatsächliche Geschwindigkeit, mit welcher der zukünftige Wegpunkt s* stabil passiert werden kann, mit einer Wahrscheinlichkeit von $q_s \times 100$ % größer oder gleich der gewählten Geschwindigkeit v* ist. Je größer $q_s$ gewählt wird, desto sicherer ist die Geschwindigkeitswahl.

Zur Ermittlung der sicheren Geschwindigkeit wird dabei für einen Fahrzeugtyp (z.B. Sportwagen, Limousine oder Geländewagen) und/oder in Abhängigkeit eines in einem Fahrzeug vorhandenen Fahrwerks (Sportfahrwerk, Komfortfahrwerk oder durch Moduswahl wählbare Fahrwerksabstimmung) ein bestimmter Wert für $q_s$ vorgegeben. Die Wahl des q-Quantils $q_s$ erfolgt dabei fest für einen Fahrzeugtyp und/oder einen Fahrwerkstyp/Fahrmodus des Fahrzeugs. Aus dem vorgegebenen q-Quantil $q_s$ und der Gleichung (1) kann dann die sichere Geschwindigkeit v* errechnet werden. Es ist klar, dass die gewählte sichere Geschwindigkeit v* dabei nicht der wahren sicheren Geschwindigkeit entspricht, welche tatsächlich nicht bekannt ist. Die sichere Geschwindigkeit v* wird jedoch derart durch geeignete Wahl des q-Quantils gewählt, dass diese mit großer Wahrscheinlichkeit kleiner als die wahre sichere Geschwindigkeit ist.

Anhand der nun vorliegenden sicheren Geschwindigkeit v* für den zukünftigen Wegpunkt s* kann dann eine Handlungsstrategie abgeleitet werden. Wird festgestellt, dass die tatsächliche Geschwindigkeit des Fahrzeugs an dem Wegpunkt s* größer als die ermittelte sichere Geschwindigkeit v* oder nur wenig unterhalb der sicheren Geschwindigkeit v* ist, so kann daraus ein Handlungsbedarf abgeleitet werden. Ein solcher Handlungsbedarf kann eine Information oder Warnung für den Fahrer oder, bei vorhandenem Fahrerassistenzsystem, eine automatisierte Fahrzeugverzögerung umfassen. Bei automatisiert fahrenden Fahrzeugen kann die sichere Geschwindigkeit v* zur Begrenzung eines Optimierungsraums genutzt werden, innerhalb dessen eine geeignete Geschwindigkeitstrajektorie bestimmt wird.

Das vorliegende Verfahren basiert auf der Überlegung, bei vorliegenden Kraftschlussinformationen über einen zukünftigen Wegpunkt anhand der errechneten sicheren Geschwindigkeit an diesem Wegpunkt und einer Geschwindigkeitsprognose aufgrund der aktuellen Reibwertausnutzung des Fahrers unter Berücksichtigung von Streckeninformationen eine Kritikalität der Fahrsituation an diesem Wegpunkt vorherzubestimmen. Hieraus kann die erwähnte Handlungsempfehlung abgeleitet werden, wie z.B. eine Vorkonditionierung eines Fahrwerksystems, eine Verzögerung des Fahrzeugs oder eine Warnung an den Fahrer.

Bezugszeichen

| | |
|---|---|
| s | aktueller Wegpunkt |
| s* | zukünftiger Wegpunkt |
| $\kappa$ | Kurvenkrümmung |
| $P_{ges}(\mu)$ | erste Wahrscheinlichkeitsverteilung |
| $P_v(v)$ | zweite Wahrscheinlichkeitsverteilung |
| $\mu$ | Reibwert |
| $q_s$ | q-Quantil |
| $v_x$ | Fahrzeuglängsgeschwindigkeit |
| $a_x$ | Fahrzeuglängsbeschleunigung |

EP 3 458 326 B1

**Patentansprüche**

1.  Verfahren zur Bestimmung einer sicheren Geschwindigkeit (v*) an einem zukünftigen Wegpunkt (s*) eines Fahrzeugs, das sich entlang einer Strecke bewegt, mit den Schritten:

    - Bereitstellen zumindest einer den Streckenverlauf der Strecke charakterisierenden Streckeninformation (insbesondere Kurvenkrümmung $\kappa$);
    - Bereitstellen einer ersten Wahrscheinlichkeitsverteilung ($P_{ges}$) eines max. Reibwerts ($\mu$) am aktuellen Wegpunkt (s) und/oder an dem zukünftigen Wegpunkt (s*) des Fahrzeugs;
    - Ermitteln einer zweiten Wahrscheinlichkeitsverteilung ($P_v$) einer Fahrzeuggeschwindigkeit (v) an dem zukünftigen Wegpunkt (s*) aus der zumindest einen Streckeninformation ($\kappa$) und der ersten Wahrscheinlichkeitsverteilung ($P_{ges}$);
    - Bestimmung der sicheren Geschwindigkeit (v*) aus der zweiten Wahrscheinlichkeitsverteilung ($P_v$), bspw. durch statistische Analyse.

2.  Verfahren nach Anspruch 1, bei dem die sichere Geschwindigkeit (v*) an dem zukünftigen Wegpunkt (s*) durch Wahl eines q-Quantils der zweiten Wahrscheinlichkeitsverteilung ($P_v$) bestimmt wird.

3.  Verfahren nach Anspruch 1, bei dem die sichere Geschwindigkeit (v*) an dem zukünftigen Wegpunkt (s*) durch Wahl eines p-Quantils der zweiten Wahrscheinlichkeitsverteilung ($P_v$) bestimmt wird.

4.  Verfahren nach Anspruch 1 oder 2, bei dem als die zumindest eine Streckeninformation eine Kurvenkrümmung ($\kappa$) an und/oder vor dem zukünftigen Wegpunkt (s*) des Fahrzeugs verarbeitet wird.

5.  Verfahren nach einem der vorhergehenden Ansprüche, bei dem der Schritt des Ermittelns der zweiten Wahrscheinlichkeitsverteilung ($P_v$) erfolgt gemäß:

$$a_x^2 + kappa^2(s) * v_x^4 - g^2 * \mu^2(s) = 0.$$

6.  Verfahren nach einem der vorhergehenden Ansprüche, bei dem der Schritt des Ermittelns der zweiten Wahrscheinlichkeitsverteilung ($P_v$) unter der Annahme erfolgt, dass das Fahrzeug ein Massepunkt mit der gegebenen Masse des Fahrzeugs ist.

7.  Verfahren nach einem der vorhergehenden Ansprüche, bei dem der Schritt des Ermittelns der zweiten Wahrscheinlichkeitsverteilung ($P_v$) unter der Annahme erfolgt, dass das Fahrzeug die Strecke, insbesondere den zukünftigen Wegpunkt (s*), unbeschleunigt, durchfährt.

8.  Verfahren nach einem der Ansprüche 2 bis 6, bei dem als p- oder q-Quantil ein für das Fahrzeug fester Wert gewählt wird, der abhängig von einem Fahrzeugtyp, einem Fahrwerkstyp oder einem Fahrmodus ist.

9.  Verfahren nach einem der Ansprüche 2 bis 7, bei dem das p- oder q-Quantil derart gewählt wird, dass die sich daraus ergebende gewählte sichere Geschwindigkeit (v*) kleiner als die wahre sichere Geschwindigkeit an dem zukünftigen Wegpunkt (s*) ist.

10. Vorrichtung zur Bestimmung einer sicheren Geschwindigkeit an einem zukünftigen Wegpunkt (s*) eines Fahrzeugs, das sich entlang einer Strecke bewegt, umfassend:

    - ein erstes Mittel, um eine zweite Wahrscheinlichkeitsverteilung ($P_v$) einer Fahrzeuggeschwindigkeit (v) an dem zukünftigen Wegpunkt (s*) aus zumindest einer den Streckenverlauf der Strecke charakterisierenden Streckeninformation ($\kappa$) und einer ersten Wahrscheinlichkeitsverteilung ($P_{ges}$) eines max. Reibwerts ($\mu$) am aktuellen Wegpunkt (s) des Fahrzeugs und/oder an dem zukünftigen Wegpunkt (s*) zu ermitteln;
    - ein zweites Mittel, um die sichere Geschwindigkeit (v*) aus der zweiten Wahrscheinlichkeitsverteilung ($P_v$) zu ermitteln.

7

**Claims**

1.  Method for determining a safe speed (v*) at a future waypoint (s*) of a vehicle moving along a route, comprising the following steps:

    - providing at least one item of route information characterizing the route course of the route (in particular curve curvature $\kappa$);
    - providing a first probability distribution ($P_{ges}$) of a maximum coefficient of friction ($\mu$) at the current waypoint (s) and/or at the future waypoint (s*) of the vehicle;
    - ascertaining a second probability distribution ($P_v$) of a vehicle speed (v) at the future waypoint (s*) from the at least one item of route information ($\kappa$) and the first probability distribution ($P_{ges}$);
    - determining the safe speed (v*) from the second probability distribution ($P_v$), e.g. by statistical analysis.

2.  Method according to Claim 1, wherein the safe speed (v*) at the future waypoint (s*) is determined by selecting a q-quantile of the second probability distribution ($P_v$).

3.  Method according to Claim 1, wherein the safe speed (v*) at the future waypoint (s*) is determined by selecting a p-quantile of the second probability distribution ($P_v$).

4.  Method according to Claim 1 or 2, wherein a curve curvature ($\kappa$) at and/or before the future waypoint (s*) of the vehicle is processed as the at least one item of route information.

5.  Method according to any of the preceding claims, wherein the step of ascertaining the second probability distribution ($P_v$) takes place according to:

$$a_x^2 + kappa^2(s) * v_x^4 - g^2 * \mu^2(s) = 0.$$

6.  Method according to any of the preceding claims, wherein the step of ascertaining the second probability distribution ($P_v$) takes place on the assumption that the vehicle is a mass point having the given mass of the vehicle.

7.  Method according to any of the preceding claims, wherein the step of ascertaining the second probability distribution ($P_v$) takes place on the assumption that the vehicle travels along the route, in particular the future waypoint (s*), in an unaccelerated manner.

8.  Method according to any of Claims 2 to 6, wherein a value which is fixed for the vehicle and which is dependent on a vehicle type, a chassis type or a driving mode is selected as the p- or q-quantile.

9.  Method according to any of Claims 2 to 7, wherein the p- or q-quantile is selected such that the selected safe speed (v*) resulting therefrom is lower than the true safe speed at the future waypoint (s*).

10. Device for determining a safe speed at a future waypoint (s*) of a vehicle moving along a route, comprising:

    - a first means for ascertaining a second probability distribution ($P_v$) of a vehicle speed (v) at the future waypoint (s*) from at least one item of route information ($\kappa$) characterizing the route course of the route and a first probability distribution ($P_{ges}$) of a maximum coefficient of friction ($\mu$) at the current waypoint (s) of the vehicle and/or at the future waypoint (s*);
    - a second means for ascertaining the safe speed (v*) from the second probability distribution ($P_v$).

**Revendications**

1.  Procédé permettant de déterminer une vitesse de sécurité (v*) au niveau d'un point de passage à venir (s*) d'un véhicule qui se déplace le long d'un parcours, comprenant les étapes consistant à :

    - fournir au moins une information de parcours (en particulier une courbure de virage $\kappa$) caractérisant le tracé de parcours du parcours ;
    - fournir une première distribution de probabilité ($P_{ges}$) d'un coefficient de frottement maximal ($\mu$) au niveau du

point de passage actuel (s) et/ou au niveau du point de passage à venir (s*) du véhicule ;
- établir une deuxième distribution de probabilité ($P_v$) d'une vitesse de véhicule (v) au niveau du point de passage à venir (s*) à partir de ladite au moins une information de parcours ($\kappa$) et de la première distribution de probabilité ($P_{ges}$) ;
- déterminer la vitesse de sécurité (v*) à partir de la deuxième distribution de probabilité ($P_v$), par exemple par analyse statistique.

2. Procédé selon la revendication 1, dans lequel la vitesse de sécurité (v*) au niveau du point de passage à venir (s*) est déterminée par le choix d'un quantile q de la deuxième distribution de probabilité ($P_v$).

3. Procédé selon la revendication 1, dans lequel la vitesse de sécurité (v*) au niveau du point de passage à venir (s*) est déterminée par le choix d'un quantile p de la deuxième distribution de probabilité ($P_v$).

4. Procédé selon la revendication 1 ou 2, dans lequel en tant qu'au moins une information de parcours, une courbure de virage ($\kappa$) au niveau du et/ou avant le point de passage à venir (s*) du véhicule est traitée.

5. Procédé selon l'une quelconque des revendications précédentes, dans lequel l'étape consistant à établir la deuxième distribution de probabilité ($P_v$) est effectuée selon :

$$\alpha_x^2 + kappa^2(s) * v_x^4 - g^2 * \mu^2(s) = 0$$

6. Procédé selon l'une quelconque des revendications précédentes, dans lequel l'étape consistant à établir la deuxième distribution de probabilité ($P_v$) est effectuée en supposant que le véhicule soit un point de masse de la masse donnée du véhicule.

7. Procédé selon l'une quelconque des revendications précédentes, dans lequel l'étape consistant à établir la deuxième distribution de probabilité ($P_v$) est effectuée en supposant que le véhicule passe sans accélération par le parcours, en particulier le point de passage à venir (s*) .

8. Procédé selon l'une quelconque des revendications 2 à 6, dans lequel en tant que quantile p ou q, une valeur fixe est choisie pour le véhicule, qui dépend d'un type de véhicule, d'un type de châssis ou d'un mode de conduite.

9. Procédé selon l'une quelconque des revendications 2 à 7, dans lequel le quantile p ou q est choisi de telle sorte que la vitesse de sécurité (v*) choisie qui en résulte est inférieure à la vitesse de sécurité réelle au niveau du point de passage à venir (s*).

10. Dispositif permettant de déterminer une vitesse de sécurité au niveau d'un point de passage à venir (s*) d'un véhicule qui se déplace le long d'un parcours, comprenant :

- un premier moyen pour établir une deuxième distribution de probabilité ($P_v$) d'une vitesse de véhicule (v) au niveau du point de passage à venir (s*) à partir d'au moins une information de parcours ($\kappa$) caractérisant le tracé de parcours du parcours, et pour établir une première distribution de probabilité ($P_{ges}$) d'un coefficient de frottement maximal (p) au niveau du point de passage actuel (s) du véhicule et/ou au niveau du point de passage à venir (s*) ;
- un deuxième moyen pour établir la vitesse de sécurité (v*) à partir de la deuxième distribution de probabilité ($P_v$).

S1

S2

Bereitstellung
Steckerinformation(en) am
Wegpunkt s*

Bereitstellung erste
Wahrscheinlichkeitsverteilung $P_{ges}$
eines Reibwertes $\mu$ am Wegpunkt s*

S3

Ermittlung zweite Wahrscheinlichkeitsverteilung einer sicheren Geschwindigkeit $P_v$
am Wegpunkt s*

S4

Bestimmung sichere Geschwindigkeit v* aus
der zweiten Wahrscheinlichkeitsverteilung $P_v$

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1870674 A2